# EUROPEAN PATENT APPLICATION

(11) **EP 4 317 753 A1**
(43) Date of publication of application: **07.02.2024**
(21) Application number: 22778314.9
(22) Date of filing: 14.01.2022
(51) Int. Cl.: F16K 27/02, F16K 27/08

(54) **STOP VALVE**

(30) Priority: 31.03.2021 CN 202110350794; 31.03.2021 CN 202120662363 U
(71) Applicant: Zhejiang Dunan Artificial Environment Co., Ltd., Shaoxing, Zhejiang 311835 (CN)
(72) Inventor: LOU, Feng, Shaoxing, Zhejiang 311835 (CN); ZHOU, Feng, Shaoxing, Zhejiang 311835 (CN); CHEN, Diyong, Shaoxing, Zhejiang 311835 (CN)
(74) Representative: Studio Torta S.p.A.
(86) International application number: PCT/CN2022/072127
(87) International publication number: WO 2022/206125

(57) **Abstract**

Provided is a stop valve, including: a valve seat (10) provided with a fluid channel (11) and a mounting hole (12), the fluid channel (11) communicates with the mounting hole (12) , and an extending direction of the mounting hole (12) and an extending direction of the fluid channel (11) are disposed at a preset angle; a valve core (20), which is mounted in the mounting hole (12), a connecting hole (21) is formed in the valve core (20), and a first internal thread is disposed in the connecting hole (21); a plugging member (30), which includes a rod body part (31) and a covering part (32), a first external thread matched with the first internal thread is disposed on the rod body part (31), the rod body part (31) is connected with the connecting hole (21) through threads, the covering part (32) is disposed at an end portion of the rod body part (31) , and the covering portion (32) protrudes out of an end portion of the mounting hole (12), so as to enable the covering part (32) to abut against the end portion of the mounting hole (12). The plugging member (30) is connected to the first internal thread in the connecting hole (21), so the technical problem that a stop valve in a related art occupies a large size is solved.

## Description

### Cross-Reference to Related Application(s)

The invention claims priority to Chinese patent application No. 202110350794.4 filed to the China National Intellectual Property Administration on March 31, 2021 and entitled "Stop Valve", and Chinese patent application No. 202120662363.7 filed to the China National Intellectual Property Administration on March 31, 2021 and entitled "Stop Valve".

### Technical Field

The invention relates to the technical field of stop valves, in particular to a stop valve.

### Background

At present, a stop valve for an air conditioner includes a valve seat, a valve chamber with threads is disposed in the valve seat, a vertical valve core mounting hole with an upward opening for communicating with the valve chamber is formed in a valve body, and a valve core passes through the valve core mounting hole to be in threaded connection with the valve chamber so as to control the on-off of a channel in the valve body. Generally, a cap is mounted at an end of the valve core mounting hole, an internal thread is mounted on an inner wall of the cap, and an external thread matched with the internal thread is disposed on the valve seat, so as to tighten the cap at a valve opening for sealing.

However, such a structure makes the size of the cap larger, resulting in a problem that an overall size of the stop valve is increased; and in addition, it also increases processing steps and processing difficulty of the valve seat.

### Summary

Some embodiments of the invention provide a stop valve, for solving the technical problem that a stop valve in an art known to inventors occupies a large size.

Some embodiments of the invention provide a stop valve, including: a valve seat provided with a fluid channel and a mounting hole, wherein the fluid channel communicates with the mounting hole, and an extending direction of the mounting hole and an extending direction of the fluid channel are disposed at a preset angle; a valve core mounted in the mounting hole, wherein a connecting hole is formed in the valve core, and a first internal thread is disposed in the connecting hole; a plugging member, which includes a rod body part and a covering part, a first external thread matched with the first internal thread is disposed on the rod body part, the rod body part is connected with the connecting hole through threads, the covering part is disposed at an end portion of the rod body part, and the covering part protrudes out of an end portion of the mounting hole and is able to enable the covering part to abut against the end portion of the mounting hole.

Furthermore, the end portion of the mounting hole is provided with a first sealing plane, the covering part is a cover plate, the cover plate is provided with a second sealing plane, and the first sealing plane and the second sealing plane are oppositely disposed.

Furthermore, the stop valve further includes: a sealing member, which is disposed between the end portion of the mounting hole and the covering part.

Furthermore, the sealing member is an annular sealing ring which sleeves the rod body part.

Furthermore, the plugging member is made of a plastic material.

Furthermore, the covering part is a round cover plate or a polygonal cover plate.

Furthermore, the first internal thread and the first external thread are both of a counterclockwise thread structure.

Furthermore, the connecting hole includes a first hole section and a second hole section which are connected with each other, the first internal thread is located at the first hole section, the second hole section is located on a side, away from the covering part, of the first hole section, and a cross section of the second hole section is of a polygonal hole structure.

Furthermore, an included angle between the extending direction of the fluid channel and the extending direction of the mounting hole is smaller than or equal to 90°.

Furthermore, a second external thread is disposed on the valve core, a second internal thread matched with the second external thread is disposed in the mounting hole, and the valve core is connected with the valve seat by threads.

By adopting the technical solution of some embodiments of the invention, after the valve core is mounted in the mounting hole, the rod body part of the plugging member extends into the valve core to be in threaded connection with the valve core, and the covering part abuts against the end portion of the mounting hole, so that the end portion of the mounting hole is covered for sealing and dust prevention through the covering part. The above structure is simple to manufacture, which does not occupy additional space, and does not greatly increase occupied size of the stop valve.

### Brief Description of the Drawings

The drawings forming a part of the invention in the specification are adopted to provide a further understanding to the invention. Schematic embodiments of the invention and descriptions thereof are adopted to explain the invention and not intended to form improper limits to the invention. In the drawings:
Fig. 1 illustrates a schematic structure diagram of a stop valve provided by an embodiment of the invention.
Fig. 2 illustrates a schematic structure diagram of a left view of the stop valve provided by an embodiment of the invention.
Fig. 3 illustrates a schematic structure diagram of a top view of the stop valve provided by an embodiment of the invention.
Fig. 4 illustrates a schematic structure diagram of a sectional view of the stop valve provided by an embodiment of the invention.
Fig. 5 illustrates a partial schematic structure diagram of a sectional view of the stop valve provided by an embodiment of the invention.
Fig. 6 illustrates an enlarged partial schematic diagram in Fig. 5.
Fig. 7 illustrates a schematic structure diagram of the stop valve with a sealing member provided by an embodiment of the invention.
Fig. 8 illustrates a schematic structure diagram of a left view of the stop valve with a sealing member provided by an embodiment of the invention.
Fig. 9 illustrates a schematic structure diagram of a top view of the stop valve with the sealing member provided by an embodiment of the invention.
Fig. 10 illustrates a schematic structure diagram of a sectional view of the stop valve with the sealing member provided by an embodiment of the invention.
Fig. 11 illustrates a partial schematic structure diagram of a sectional view of the stop valve with the sealing member provided by an embodiment of the invention.
Fig. 12 illustrates an enlarged partial schematic diagram in Fig. 11.

The drawings include the following reference signs.
10. Valve seat; 11. Fluid channel; 12. Mounting hole; 20. Valve core; 21. Connecting hole; 211. First hole section; 212. Second hole section; 30. Plugging member; 31. Rod body part; 32. Covering part; 40. Sealing member; and 50. Connecting pipe.

### Detailed Description of the Embodiments

It is to be noted that the embodiments and features in the embodiments of the invention may be combined with each other without conflict. The invention will be described in detail below with reference to the accompanying drawings and the embodiments.

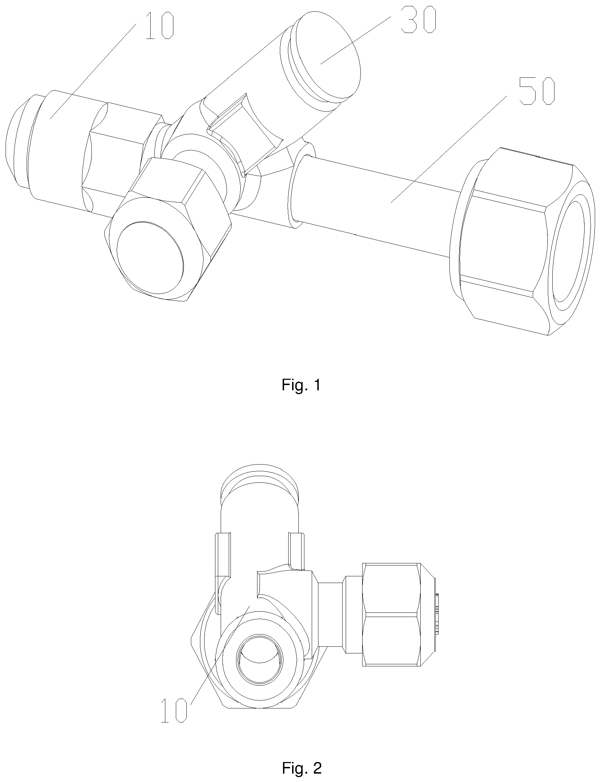

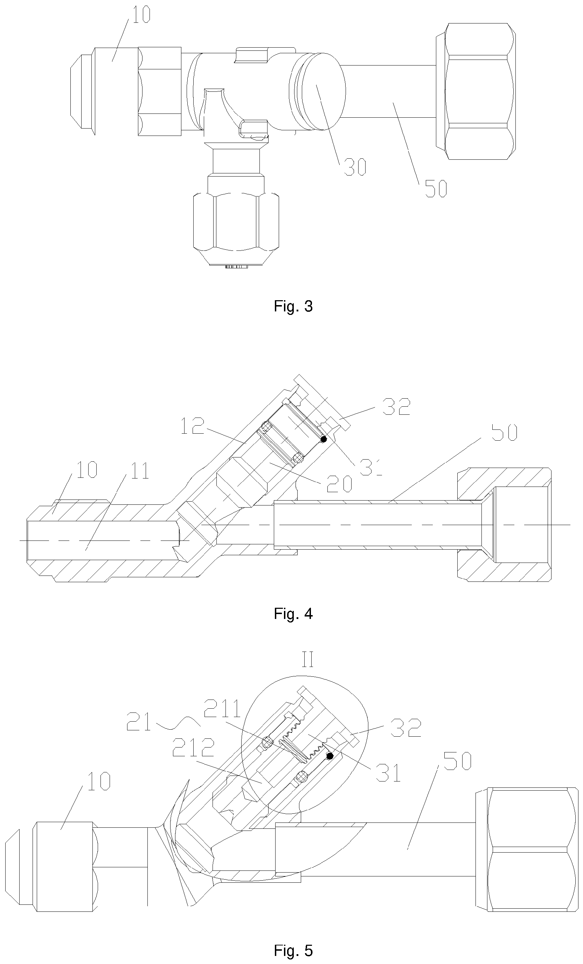

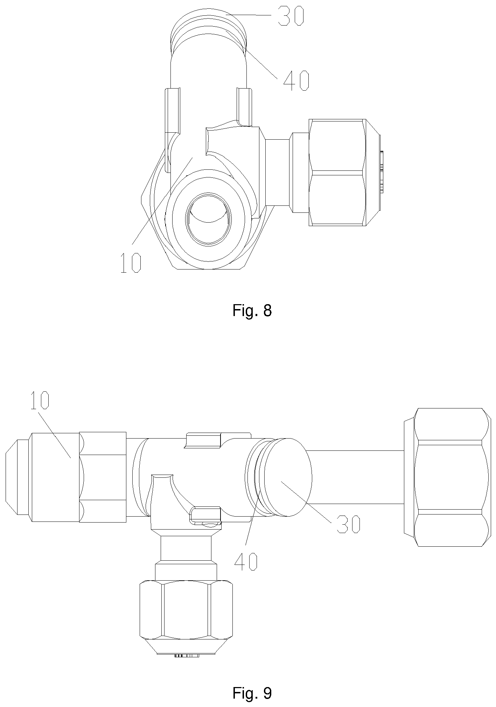

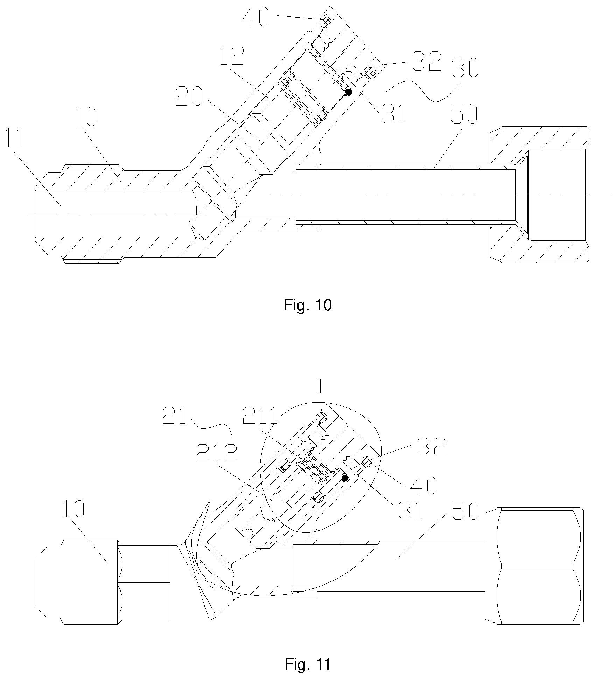

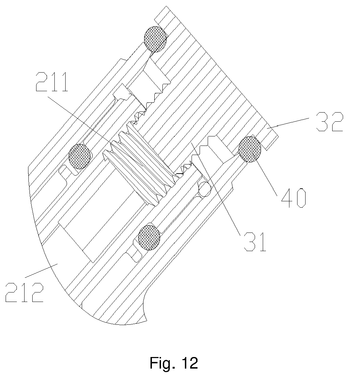

As shown in Figs. 1-12, the embodiments of invention provide a stop valve, including: a valve seat 10, a valve core 20 and a plugging member 30, the valve seat 10 is provided with a fluid channel 11 and a mounting hole 12, the fluid channel 11 communicates with the mounting hole 12, and an extending direction of the mounting hole 12 and an extending direction of the fluid channel 11 are disposed at a preset angle. The valve core 20 is mounted in the mounting hole 12, a connecting hole 21 is formed in the valve core 20, and a first internal thread is disposed in the connecting hole 21. The plugging member 30 includes a rod body part 31 and a covering part 32, a first external thread matched with the first internal thread is disposed on the rod body part 31, the rod body part 31 is connected with the connecting hole 21 through threads, the covering part 32 is disposed at an end portion of the rod body part 31, and the covering portion 32 protrudes out of an end portion of the mounting hole 12, so as to enable the covering part 32 to abut against the end portion of the mounting hole 12.

By adopting the stop valve provided by the embodiment, after the valve core 20 is mounted in the mounting hole 12, the rod body part 31 of the plugging member 30 extends into the valve core 20 to be in threaded connection with the valve core 20, and the covering part 32 abuts against the end portion of the mounting hole 12, so that the end portion of the mounting hole 12 is covered for sealing and dust prevention through the covering part 32. The above structure is simple to manufacture, which does not occupy additional space, and does not greatly increase occupied size of the stop valve.

In the embodiment, the end portion of the mounting hole 12 is provided with a first sealing plane, the covering part 32 is a cover plate, the cover plate is provided with a second sealing plane, and the first sealing plane and the second sealing plane are oppositely disposed. In some embodiments, the first sealing plane and the second sealing plane may attach to seal the mounting hole 12, so that the sealing effect is improved.

In some embodiments, the stop valve further includes a sealing member 40, wherein the sealing member 40 is disposed between the end portion of the mounting hole 12 and the covering part 32. By adopting the structural arrangement, the sealing effect may be improved.

In the embodiment, the sealing member 40 is an annular sealing ring which sleeves the rod body part 31. By adopting the structural arrangement, a compactness of structural arrangement may be effectively improved, and the sealing effect may also be better improved. Therefore, sealing and dust prevention may be carried out on an end face at a small torque.

In the embodiment, the plugging member 30 is made of a plastic material. By adopting the structural arrangement, production and manufacturing costs may be effectively reduced.

In some embodiments, the covering part 32 is a round cover plate or a polygonal cover plate. Specifically, the polygonal cover plate may be a triangular cover plate, a rectangular cover plate, a pentagonal cover plate or a hexagonal cover plate, etc., with the polygonal cover plate, external force may be conveniently carried out on the cover plate, so as to facilitate the operation on the covering part 32.

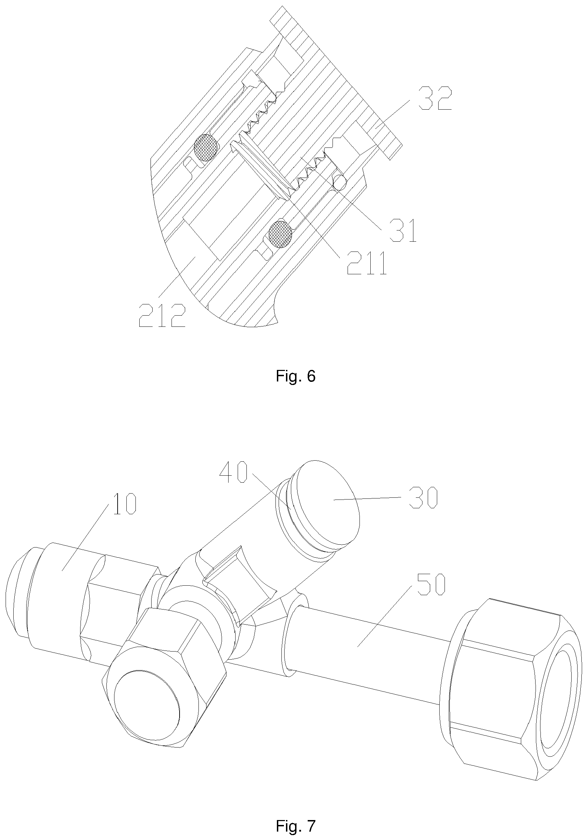

In the embodiment, the first internal thread and the first external thread are both of a counterclockwise thread structure. By adopting the structural arrangement, the first internal thread and the first external thread are both of a counterclockwise thread structure, so that during counterclockwise rotation, a clamping ring is used for limiting (as shown in Fig. 6), then the valve core 20 may not escape, the rod body part 31 is tightened, and the fastening force of threads enables the end face of the rod body part 31 to tightly attach to an end of a mounting opening to play a dust prevention role. Or, the first internal thread and the first external thread may also be both of a clockwise thread structure.

In some embodiments, the connecting hole 21 includes a first hole section 211 and a second hole section 212 which are connected with each other, the first internal thread is located at the first hole section 211, the second hole section 212 is located on a side, away from the covering part 32, of the first hole section 211, and a cross section of the second hole section 212 is of a polygonal hole structure. By adopting the structural arrangement, by disposing the second hole section 212 in a polygonal hole structure, the valve core 20 may be conveniently mounted, specifically, by disposing the polygonal hole, the valve opening of the stop valve may be closed and opened. The second hole section 212 is disposed on the side, away from the covering part 32, of the first hole section 211, so that the plugging member 30 may be conveniently mounted. In some embodiments, the polygonal hole structure may be of a hexagonal hole structure or a quadrangular hole structure

In the embodiment, the included angle between the extending direction of the fluid channel 11 and the extending direction of the mounting hole 12 is smaller than or equal to 90°.

In the embodiment, a second external thread is disposed on the valve core 20, a second internal thread matched with the second external thread is disposed in the mounting hole 12, and the valve core 20 is connected with the valve seat 10 by the threads. By adopting the structural arrangement, the valve core 20 may be conveniently mounted.

In the embodiment, the stop valve further includes a connecting pipe 50, and the connecting pipe 50 is connected with the valve seat 10.

From the above description, it can be seen that the above embodiments of the invention achieve the following technical effects: the occupied size of the stop valve is reduced, and the processing steps and processing difficulty of the valve seat are reduced.

It is to be noted that terms used herein are for the purpose of describing specific implementation modes only and are not intended to be limiting of exemplary implementation modes according to the invention. Unless otherwise pointed out explicitly, a singular form used herein is also intended to include a plural form. In addition, it should also be understood that the term "include" and/or "comprise" used in the description indicates that there are features, steps, operations, devices, assemblies and/or combinations thereof.

Unless otherwise specified, relative arrangements of components and steps elaborated in these embodiments, numeric expressions and numeric values do not limit the scope of the invention. Furthermore, it should be understood that for ease of descriptions, the size of each part shown in the drawings is not drawn in accordance with an actual proportional relation. Technologies, methods and devices known by those of ordinary skill in the related art may not be discussed in detail. However, where appropriate, the technologies, the methods and the devices shall be regarded as part of the authorized description. In all examples shown and discussed herein, any specific values shall be interpreted as only exemplar values instead of limited values. Therefore, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the descriptions of the invention, it will be appreciated that locative or positional relations indicated by "front, back, up, down, left, and right", "horizontal, vertical, perpendicular, and horizontal", "top and bottom" and other terms are locative or positional relations shown on the basis of the drawings, which are only intended to make it convenient to describe the invention and to simplify the descriptions without indicating or impliedly indicating that the referring device or element must have a specific location and must be constructed and operated with the specific location, unless otherwise stated, and accordingly it cannot be understood as limitations to the invention. The nouns of locality "inner and outer" refer to the inner and outer contours of each component.

For ease of description, spatial relative terms such as "over", "above", "on an upper surface" and "upper" may be used herein for describing a spatial position relation between a device or feature and other devices or features shown in the drawings. It will be appreciated that the spatial relative terms aim to contain different orientations in usage or operation besides the orientations of the devices described in the drawings. For example, if the devices in the drawings are inverted, devices described as "above other devices or structures" or "over other devices or structures" will be located as "below other devices or structures" or "under other devices or structures". Thus, an exemplar term "above" may include two orientations namely "above" and "below". As an alternative, the device may be positioned with other different modes (90° rotation or positioned at other orientations), and the spatial relative description used here needs to be explained correspondingly.

In addition, it is to be noted that terms "first", "second" and the like are used to limit parts, and are only intended to distinguish corresponding parts. If there are no otherwise statements, the above terms do not have special meanings, such that they cannot be understood as limits to the scope of protection of the invention.

The foregoing is merely some embodiments of the invention and is not intended to limit the invention, and various modifications and variations of the invention may be available for those skilled in the art. Any modifications, equivalent replacements, improvements and the like made within the spirit and principle of the invention shall fall within the scope of protection of the invention.

## Claims

1. A stop valve, comprising:
a valve seat (10) provided with a fluid channel (11) and a mounting hole (12), wherein the fluid channel (11) communicates with the mounting hole (12), and an extending direction of the mounting hole (12) and an extending direction of the fluid channel (11) are disposed at a preset angle;
a valve core (20) mounted in the mounting hole (12), wherein a connecting hole (12) is formed in the valve core (20), and a first internal thread is disposed in the connecting hole (21); and
a plugging member (30), which comprises a rod body part (31) and a covering part (32), a first external thread matched with the first internal thread is disposed on the rod body part (31), the rod body part (31) is connected with the connecting hole (21) through threads, the covering part (32) is disposed at an end portion of the rod body part (31), and the covering portion (32) protrudes out of an end portion of the mounting hole (12) and is able to enable the covering part (32) to abut against the end portion of the mounting hole (12).

2. The stop valve according to claim 1, wherein the end portion of the mounting hole (12) is provided with a first sealing plane, the covering part (32) is a cover plate, the cover plate is provided with a second sealing plane, and the first sealing plane and the second sealing plane are oppositely disposed.

3. The stop valve according to claim 1, further comprising:
a sealing member (40) disposed between the end portion of the mounting hole (12) and the covering part (32).

4. The stop valve according to claim 3, wherein the sealing member (40) is an annular sealing ring which sleeves the rod body part (31).

5. The stop valve according to claim 1, wherein the plugging member (30) is made of a plastic material.

6. The stop valve according to claim 1, wherein the covering part (32) is a round cover plate or a polygonal cover plate.

7. The stop valve according to claim 1, wherein the first internal thread and the first external thread are both of a counterclockwise thread structure.

8. The stop valve according to claim 1, wherein the connecting hole (21) comprises a first hole section (211) and a second hole section (212) which are connected with each other, the first internal thread is located at the first hole section (211), the second hole section (212) is located on a side, away from the covering part (32), of the first hole section (211), and a cross section of the second hole section (212) is of a polygonal hole structure.

9. The stop valve according to claim 1, wherein an included angle between the extending direction of the fluid channel (11) and the extending direction of the mounting hole (12) is smaller than or equal to 90°.

10. The stop valve according to claim 1, wherein a second external thread is disposed on the valve core (20), a second internal thread matched with the second external thread is disposed in the mounting hole (12), and the valve core (20) is connected with the valve seat (10) by threads.
